# NEW EUROPEAN PATENT SPECIFICATION

(11) **EP 2 676 779 B2**
(45) Date of publication and mention of the opposition decision: **24.02.2021**
(45) Mention of the grant of the patent: 26.04.2017
(21) Application number: 11858598.3
(22) Date of filing: 02.05.2011
(51) Int. Cl.: B29B 7/18, B29B 7/24, F15B 15/04

(54) **INTERNAL MIXER**
INNENMISCHER
MELANGEUR INTERNE

(30) Priority: 16.02.2011 JP 2011031430
(43) Date of publication of application: 25.12.2013
(73) Proprietor: Mitsubishi Heavy Industries Machinery Technology Corporation, Hiroshima 733-8553 (JP)
(72) Inventor: TATEMI, Hiroki, Tokyo 108-8215 (JP); MORITA, Mitsuru, Tokyo 108-8215 (JP); HANADA, Shuichi, Tokyo 108-8215 (JP); MORIBE, Takashi, Tokyo 108-8215 (JP); TAKAHASHI, Kazuhito, Tokyo 108-8215 (JP); NISHIHARA, Yoshikazu, Tokyo 108-8215 (JP); URAKAMI, Yoshihito, Tokyo 108-8215 (JP)
(74) Representative: Henkel & Partner mbB
(86) International application number: PCT/JP2011/060553
(87) International publication number: WO 2012/111178

(56) References cited:
- EP-A1- 0 272 338
- EP-A1- 0 272 338
- EP-A1- 0 272 338
- DE-C1- 3 426 442
- DE-C1- 3 426 442
- DE-C1- 3 426 442
- JP-A- 1 262 934
- JP-A- 1 262 934
- JP-A- 3 016 628
- JP-A- 8 047 922
- JP-A- 10 211 616
- JP-B2- 3 474 725
- US-A- 3 202 062
- US-A- 3 314 336
- US-A- 4 318 572
- US-A- 4 877 328

## Description

### {Technical Field}

The present invention relates to an internal mixer in which rotors mix and knead a material in a mixing chamber and a floating weight pushes down the material during mixing and kneading the material.

### {Background Art}

An internal mixer has a mixing chamber having rotors incorporated in a hopper (body), and mixes and kneads a material in the mixing chamber. A material to be mixed and kneaded is a raw material used for various rubber products such as a tire for an automobile. The internal mixer is provided with a floating weight for pushing down the material in the mixing chamber during mixing and kneading the material. The floating weight moves upward and downward by activation of hydraulic cylinders.

Each hydraulic cylinder is connected at its head to the hopper and connected at its rod to a connecting beam. The connecting beam is a horizontal member disposed above the hopper and extending in a direction substantially perpendicular to the upward and downward direction. Other than the hydraulic cylinders, a rod member whose lower end is fixed to the floating weight is connected to the connecting beam. The hydraulic cylinders are activated so as to move the floating weight upward and downward along with the upward and downward movement of the connecting beam and the rod member.

During mixing and kneading the material, the motion of the rod member occurs in accordance with the motion of the floating weight in contact with the material. Hence, the hydraulic cylinder should be prevented from receiving, through the connecting beam, bending stress caused by the movement of the rod member. JP 3474725 B discloses a technique to secure a smooth upward and downward movement of a floating weight, and to prevent abnormal abrasion of a guide member for guiding a rod member. The guide member is a member attached to a hopper top surface.

US 4877328 A discloses an internal mixer with a mixing chamber and hydraulic cylinders that are symmetrically disposed about a charging hopper. A floating weight is driven via a movable crosspiece and a shaft. The floating weight is connected to the shaft and the upper end of the shaft is secured in the crosspiece such that the shaft is apparently inserted through a through hole in the crosspiece and is retained by an expanded head at the top end having a larger radius than the radius of the through hole. The cylinders are connected by simple pivot joints to the crosspiece.

US 4318572 A discloses a swivel joint for transmitting high loads from hydraulic actuators without encountering high friction forces while permitting swiveling of the joint across a substantial range of angles.

### {Summary of Invention}

### {Technical Problem}

The technique disclosed in JP 3474725 B sets a gap at a connection portion between a rod of each hydraulic cylinder and a connecting beam to be equal to or greater than a gap between the rod member and the guide member. Unfortunately, abrasion due to repetitive operations of the mixer widens the gap between the rod member and the guide member, and if this gap becomes equal to or greater than the gap at the connection portion between the rod of each hydraulic cylinder and the connecting beam, bending stress acts on the hydraulic cylinders. If the amount of movement of the connecting beam due to inclination of the connecting beam becomes equal to or greater than the gap at the connection portion between the rod of each hydraulic cylinder and the connecting beam, bending stress also acts on the hydraulic cylinders. Consequently, such disadvantages occur that the hydraulic cylinders do not work smoothly, or damages are caused on components of the hydraulic cylinders.

The present invention has been made in the light of the above disadvantages, and has an object to provide an internal mixer capable of securing a smooth operation of each hydraulic cylinder and of preventing damages on the hydraulic cylinders regardless of movement of a floating weight or force applied on the floating weight.

### {Solution to Problem}

In order to solve the above disadvantages, the internal mixer according to the present invention employs the features of claim 1.

According to the present invention, the body has the mixing chamber thereinside, and the floating weight pushes the material in the mixing chamber. The material in the mixing chamber is pushed down by the floating weight while the material is being mixed and kneaded by rotors and others provided in the mixing chamber. The one end of the rod member is fixed to the floating weight, and the floating weight is movable in the axial direction along with the rod member. The other end of the rod member is fixed to the middle portion of the connecting beam.

The connecting beam may be a member extending perpendicularly to the axial direction of the rod member, for example. Each end of the connecting beam is connected to one end of each cylinder. The other end of the cylinder is connected to the body, so that the cylinder moves the connecting beam relative to the body in the axial direction of the rod member. Therefore, the rod member and the floating weight are movable in the axial direction of the rod member by the movement of the cylinder.

In addition, the first connection portion is provided at the connection portion between the connecting beam and the cylinder, and the first connection portion allows the cylinder to be at least biaxially rotatable around this connection portion. Force is applied onto the floating weight in various directions such as vertical and horizontal directions during mixing and kneading the material, and even if such force in various directions is transferred to the cylinder through the rod member or the connecting beam, the connection portion between the connecting beam and the cylinder allows the cylinder to be inclined in various angular directions. Accordingly, it is possible to prevent bending stress from acting on the cylinder.

The internal mixer further includes a second connection portion provided at a connection portion between the body and each cylinder, each cylinder being at least biaxially rotatable.

According to this aspect of the present invention, the first connection portion is provided at the connection portion between the connecting beam and each cylinder, and the second connection portion allows each cylinder to be at least biaxially rotatable around this connection portion. Force is applied onto the floating weight in various directions such as vertical and horizontal directions during mixing and kneading the material, and even if such force in various directions is transferred to the cylinder through the rod member or the connecting beam, the connection portion between the body and the cylinder allows the cylinder to be inclined in various angular directions. Accordingly, it is possible to prevent bending stress from acting on the cylinder.

In the present invention, the internal mixer further includes a guide rod disposed to the body and having an axis parallel to the axial direction of the rod member, and the connecting beam is provided with a through hole through which the guide rod is inserted, and the connecting beam may move along the guide rod through the through hole in the axial direction of the rod member.

According to the present invention, the guide rod is disposed to the body, and the guide rod is inserted through the through hole formed in the connecting beam. The guide rod has an axis parallel to the axial direction of the rod member, and when the connecting beam moves along the guide rod through the through holes, the movement direction of the connecting beam is identical to the axial direction of the rod member. Accordingly, it is possible to move the rod member together with the connecting beam in the axial direction without being inclined, and to smoothly move the floating weight.

### {Advantageous Effects of Invention}

According to the present invention, it is possible to secure a smooth operation of each hydraulic cylinder, and to prevent damages on each hydraulic cylinder regardless of a movement of the floating weight or force acting on the floating weight.

### {Brief Description of Drawings}

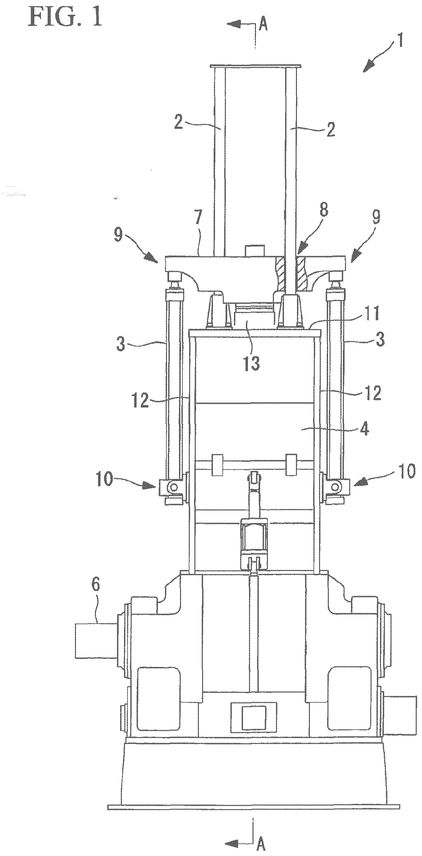

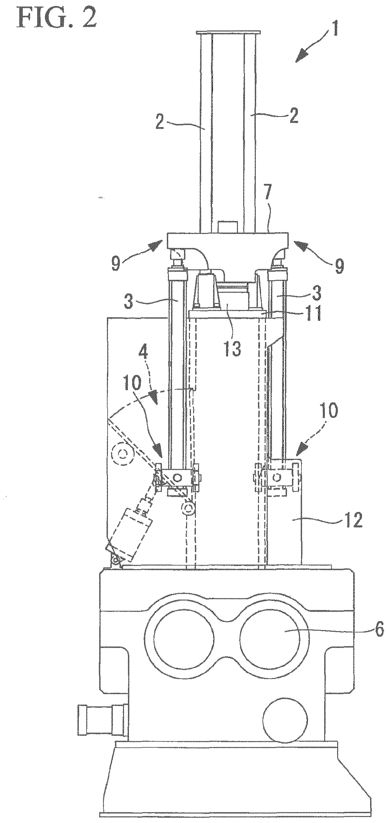

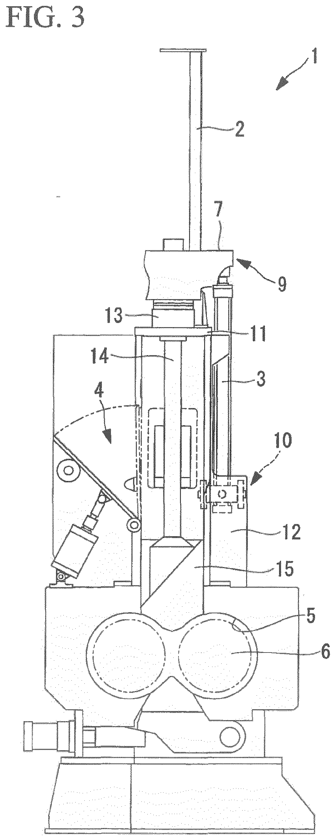

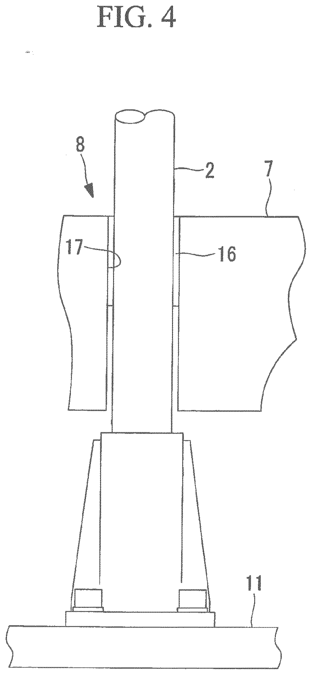

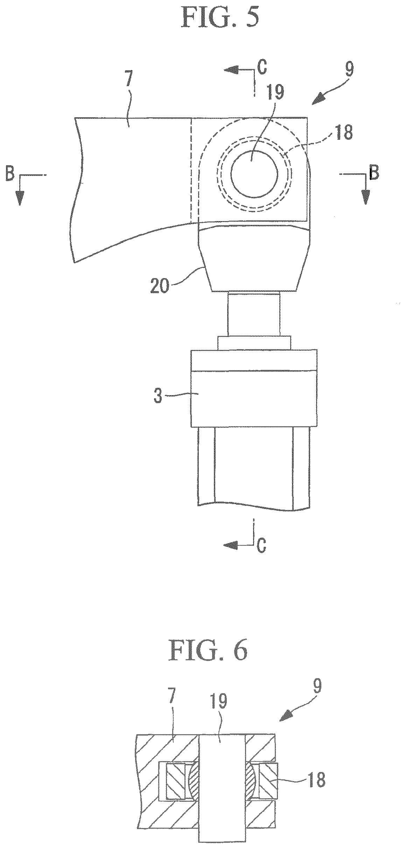

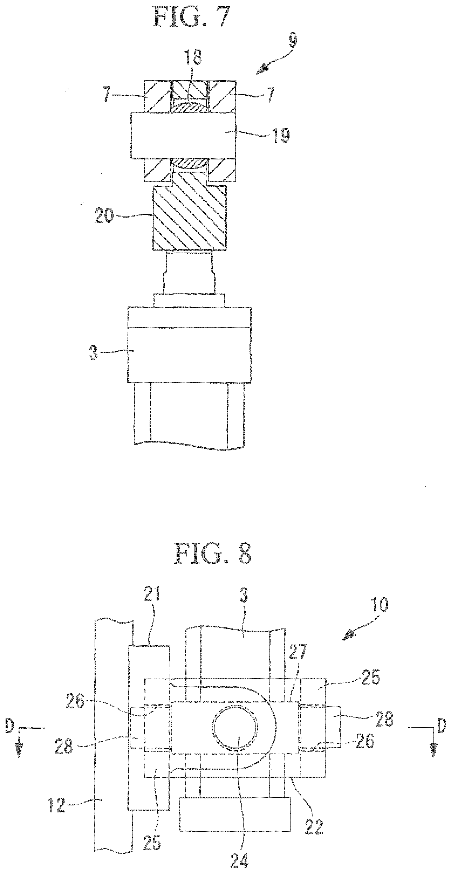

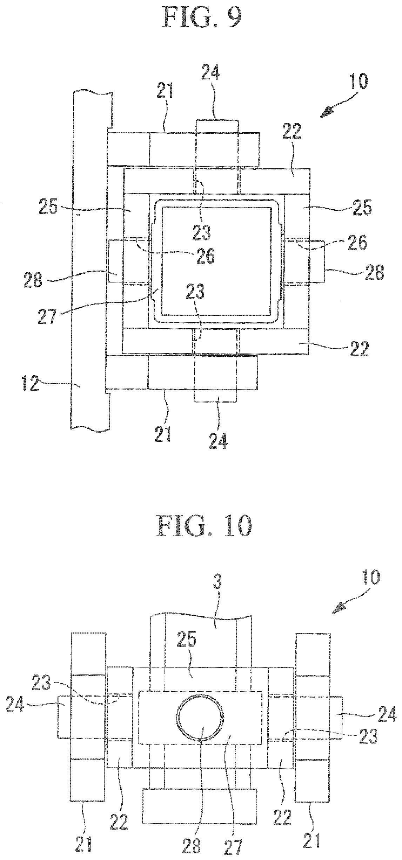

{Fig. 1} Fig. 1 is a side view of illustrating the internal mixer according to one embodiment of the present invention.
{Fig. 2} Fig. 2 is a front view of illustrating the internal mixer according to one embodiment of the present invention.
{Fig. 3} Fig. 3 is a cross sectional view taken along a line A-A of Fig. 1.
{Fig. 4} Fig. 4 is a partial enlarged cross sectional view of illustrating a sliding portion.
{Fig. 5} Fig. 5 is a front view of illustrating a first connection portion.
{Fig. 6} Fig. 6 is a cross sectional view taken along a line B-B of Fig. 5.
{Fig. 7} Fig. 7 is a cross sectional view taken along a line C-C of Fig. 5.
{Fig. 8} Fig. 8 is a side view of illustrating a second connection portion.
{Fig. 9} Fig. 9 is a cross sectional view taken along a line D-D of Fig. 8.
{Fig. 10} Fig. 10 is a front view of illustrating the second connection portion.

### {Description of Embodiment}

Hereinafter, the embodiment of the present invention will be described with reference to the drawings.

With reference to Fig. 1 to Fig. 3, description will now be provided on the configuration of an internal mixer 1 according to one embodiment of the present invention.

The internal mixer 1 includes a mixing chamber 5 having rotors 6 incorporated at a lower portion of a hopper 12, and mixes and kneads a material in the mixing chamber 5. A material to be mixed and kneaded may be a raw material used in various rubber products such as a tire for an automobile.

The hopper 12 has a hollow thereinside, and is provided with an input port 4 on its side face so as to be opened and closed, and input the material into the hopper 12. Each hydraulic cylinder 3 is fixed at its head to the side face of the hopper 12 such that the hydraulic cylinder 3 is disposed so as to extend along the side face of the hopper 12.

The internal mixer 1 includes a floating weight 15, a rod member 14, a connecting beam 7, the hydraulic cylinders 3, and a guide rod 2 and others. In the present embodiment, a portion where the connecting beam 7 and the guide rod 2 slide relative to each other is referred to as a sliding portion 8, a connection portion where the connecting beam 7 and each hydraulic cylinder 3 are connected to each other is referred to as a first connection portion 9, and a connection portion where the hopper 12 and each hydraulic cylinder 3 are connected to each other is referred to as a second connection portion 10.

The floating weight 15 is disposed inside the hopper 12 and at the upper portion of the mixing chamber 5. The bottom surface of the floating weight 15 is in contact with the material, and the top surface thereof is connected to the rod member 14. The floating weight 15 pushes down the top of the material in the mixing chamber 5 while the rotors 6 are mixing and kneading the material in the mixing chamber 5. Accordingly, the floating weight 15 is subjected to forces in various directions such as vertical and horizontal directions during mixing and kneading the material. The floating weight 15 is movable upward and downward along with the movement of the rod member 14.

The rod member 14 is disposed in the hopper 12 so as to have an axial direction identical to the vertical direction of the hopper 12, and the upper end of the rod member 14 extends through the hopper top surface 11. The rod member 14 is connected at its lower end to the floating weight 15 so as to support the floating weight 15. The rod member 14 is connected at its upper end to the connecting beam 7 at a position above the hopper top surface 11. The rod member 14 is movable upward and downward in its axial direction along with the movement of the connecting beam 7.

The guide member 13 is disposed on the outer surface of the hopper top surface 11, and a through hole through which the rod member 14 is inserted is formed in the guide member 13. The rod member 14 slides along the inner peripheral wall of the through hole of the guide member 13.

The connecting beam 7 may be a long horizontal member extending in one direction and disposed perpendicular to the axial direction of the rod member 14, for example. The connecting beam 7 is connected at its middle portion to the upper end of the rod member 14, and connected at its each end to each hydraulic cylinder 3, respectively. A through hole for inserting a guide rod 2 therethrough is formed in the connecting beam 7.

The guide rod 2 is a rod member, and its lower end is disposed on the hopper top surface 11. Two guide rods 2 may be provided, for example, and the respective rods are disposed such that each axial direction of the guide rods 2 is parallel to the axial direction of the rod member 14. Each guide rod 2 extends through the through hole formed in the connecting beam 7. Since the guide rods 2 have axes parallel to the axial direction of the rod member 14, when the connecting beam 7 moves along the guide rods 2 through the through holes, the movement direction of the connecting beam 7 is identical to the axial direction of the rod member 14.

The hydraulic cylinder 3 is one example of a cylinder, and may be an oil-hydraulic cylinder, for example. The hydraulic cylinders 3 may be disposed at two positions along the side face of the hopper 12, for example. Each hydraulic cylinder 3 is connected to the connecting beam 7 and to the hopper 12 such that a piston rod at the upper end of the hydraulic cylinder 3 is connected to the connecting beam 7, and the head at the lower end of the hydraulic cylinder 3 where its piston rod do not come outside is connected to the side face of the hopper 12. Each hydraulic cylinder 3 is activated so as to move the connecting beam 7 upward and downward relative to the hopper 12. Specifically, the connecting beam 7 moves in the axial direction of the rod member 14, and the rod member 14 connected to the connecting beam 7 also moves together with the floating weight 15 fixed to the rod member 14 in the axial direction of the rod member 14.

With reference to Fig. 4, description will now be provided on the sliding portion 8.

The sliding portion 8 includes each guide rod 2 fixed to the hopper top surface 11 and each through hole 17 formed in the connecting beam 7 for inserting each guide rod 2 therethrough. The axial direction of each through hole 17 is disposed to be parallel to the upward and downward direction of the floating weight 15. A guide bush 16 is inserted in each through hole 17, and the connecting beam 7 slides along each guide rod 2 through a guide bush 16. Accordingly, when the connecting beam 7 moves upward above the hopper top surface 11, the connecting beam 7 is supported by a pair of the guide rods 2 in the direction vertical to the axial direction of each guide rod 2.

With reference to Fig. 5 to Fig. 7, description will now be provided on the first connection portion 9.

The first connection portion 9 denotes the connection portion between the connecting beam 7 and each hydraulic cylinder 3. The first connection portion 9 allows each hydraulic cylinder 3 to be at least biaxially rotatable around the connection portion between the connecting beam 7 and each hydraulic cylinder 3.

The first connection portion 9 has a configuration as illustrated in Fig. 5 to Fig. 7, for example. Specifically, a coupling bracket 20 is disposed at the tip end of the piston rod of each cylinder 3, and the coupling bracket 20 is inserted in a groove provided in the connecting beam 7. A pin 19 is inserted through both of a spherical bearing 18 disposed to the coupling bracket 20 and the connecting beam 7.

This configuration connects the connecting beam 7 and each hydraulic cylinder 3 to each other. The configuration of using the spherical bearing 18 at the connection portion between the connecting beam 7 and each hydraulic cylinder 3 not only enables a single-axial rotation of each hydraulic cylinder 3 through a hinge coupling, but also allows each hydraulic cylinder 3 to be movable in various angular directions.

With reference to Fig. 8 to Fig. 10, description will now be provided on the second connection portion 10.

The second connection portion 10 is a connection portion between the hopper 12 and each hydraulic cylinder 3. The second connection portion 10 allows the hydraulic cylinder 3 to be at least biaxially rotatable around the connection portion between the hopper 12 and each hydraulic cylinder 3.

The second connection portion 10 has a configuration as illustrated in Fig. 8 to Fig. 10, for example. Specifically, a pair of support brackets 21 supporting a pin 24 to the hopper 12 are disposed opposite to each other. The pin 24 is fixed to the support brackets 21 so as to be parallel to the side face of the hopper 12. Adaptor members 22, 25 are disposed between the pair of the support brackets 21. These adaptor members 22, 25 constitute four sides, thereby defining an adaptor that is a frame member. A through hole 23 through which the pin 24 is inserted is formed in each adaptor member 22, and a through hole 26 through which the pin 28 is inserted is formed in each adaptor member 25. A support member 27 having the pin 28 is installed in the adaptor constituted by the adaptor members 22, 25. The pin 28 is fixed to the support member 27 so as to be vertical to the side face of the hopper 12. The support member 27 accommodates the head of each hydraulic cylinder 3 as well as supports the hydraulic cylinder 3. The structure of the support member 27 and the pin 28 may be embodied by installing a trunnion to each hydraulic cylinder 3.

The hopper 12 and each hydraulic cylinder 3 are connected to each other through the above described configuration. In addition, the two pins 24, 28 perpendicular to each other are provided, and the adaptor constituted by the adaptor members 22, 25 and the support member 27 are provided at the connection portion between the hopper 12 and each hydraulic cylinder 3, so as to allow each hydraulic cylinder 3 to be biaxially rotatable. This configuration enables a single-axial rotation of each hydraulic cylinder 3 through a hinge coupling, but also allows each cylinder 3 to be movable in various angular directions.

Description will now be provided on the advantageous effects of the internal mixer 1 according to the present embodiment.

In the internal mixer 1, bending stress may act on the hydraulic cylinders 3 if the gap between the rod member 14 and the guide member 13 becomes greater because of abrasion due to repetitive operations, or the amount of movement of the connecting beam 7 becomes greater due to the inclination of the connecting beam 7.

To the contrary, according to the present invention, the spherical bearing is used at the first connection portion 9 at the tip end of the piston rod of each hydraulic cylinder 3, so that the piston rod of each hydraulic cylinder 3 becomes movable in various angular directions. In addition, the two pins 24, 26 perpendicular to each other are used at the second connection portion 10 at the head of each hydraulic cylinder 3, which enables the head of each hydraulic cylinder 3 to be movable in various angular directions in accordance with the movement of the piston rod of each hydraulic cylinder 3.

Force is applied onto the floating weight 15 in various directions such as vertical and horizontal directions during mixing and kneading the material, and even if force in various directions is transferred to the hydraulic cylinders 3 through the rod member 14 or the connecting beam 7, the first and the second connection portions 9, 10 allow each hydraulic cylinder 3 to be inclined in various angular directions. As a result, the internal mixer 1 according to the present embodiment prevents bending stress from acting on the hydraulic cylinders 3. Accordingly, it is possible to prevent damages on the components of the hydraulic cylinders 3 and to secure a smooth operation of the hydraulic cylinders 3.

The plural guide rods 2 are disposed on the hopper top surface 11, and the guide rods 2 and the guide bushes 16 at the through holes 17 formed in the connecting beams 7 slide relative to each other, so that the connecting beam 7 moves upward and downward along the guide rods 2. As a result, even if the plural hydraulic cylinders 3 work asynchronously so that the connecting beam 7 becomes inclined, the connecting beam 7 can be forcibly maintained to be horizontal relative to the vertical direction of the hopper 12. Accordingly, it is possible to secure a smooth upward and downward movement of the floating weight 15 without inclining the rod member 14 connected to the connecting beam 7 and without causing abnormal abrasion to the guide member 13 along which the rod member 14 slides

### {Reference Signs List}

- 1: Internal mixer
- 2: Guide rod
- 3: Hydraulic cylinder (cylinder)
- 4: Input port
- 5: Mixing chamber
- 6: Rotor
- 7: Connecting beam
- 8: Sliding portion
- 9: First connection portion
- 10: Second connection portion
- 11: Hopper top surface
- 12: Hopper (body)
- 13: Guide member
- 14: Rod member
- 15: Floating weight
- 16: Guide bush
- 17: Through hole
- 18: Spherical bearing
- 19: Pin
- 20: Coupling bracket
- 21: Support bracket
- 22, 25: Adaptor members
- 23, 26: Through holes
- 24, 28: Pins
- 27: Support member

## Claims

1. An internal mixer (1) comprising:
a body (12) having a mixing chamber (5) thereinside;
a floating weight (15) for pushing a material in the mixing chamber (5);
a rod member (14) which is disposed in the body (12) so that one end of the rod member (14) is fixed to the floating weight (15) and an upper end of the rod member (14) extends through a body top surface (11), the rod member (14) being movable in an axial direction thereof;
a connecting beam (7) whose middle portion is fixed to another end of the rod member (14);
two cylinders (3) including a first and a second cylinder (3), wherein one end of the first cylinder (3) is connected to an end of the connecting beam (7) and the other end of the first cylinder (3) is connected to the body (12), wherein one end of the second cylinder (3) is connected to another end of the connecting beam (7) and the other end of the second cylinder (3) is connected to the body (12), so as to be able to move the connecting beam (7) in an axial direction of the rod member (14);
a first connection portion (9) provided at a connection portion between the connecting beam (7) and each cylinder (3), wherein the first connection portion (9) allows each cylinder (3) to be at least biaxially rotatable around the first connection portion (9) between the connecting beam (7) and each cylinder (3); and
a guide rod (2) disposed to the body (12) and having an axis parallel to the axial direction of the rod member (14),
**characterized in that**
the internal mixer (1) comprises a guide member (13) disposed on an outer surface of the body top surface (11), and a through hole through which the rod member (14) is inserted is formed in the guide member (13) such that the rod member (14) slides along the inner peripheral wall of the through hole of the guide member (13),
the connecting beam (7) is provided with a through hole (17) through which the guide rod (2) is inserted, and a guide bush (16) is inserted in the through hole (17),
the connecting beam (7) is arranged to move along the guide rod (2) through the through hole (17) in the axial direction of the rod member (14) and the connecting beam (7) slides along the guide rod (2) through the guide bush (16),
the first connection portion (9) has a spherical bearing (18) at the connection portion between the connection portion (9) and each cylinder (3).
the internal mixer (1) further comprises a second connection portion (10) provided at a connection portion between the body (12) and each cylinder (3), wherein each cylinder (3) is at least biaxially rotatable around the second connection portion (10), and
the second connection portion (10) includes:
a first pin (24) fixed to a pair of support brackets (21) so as to be parallel to a side face of the body (12),
adaptor members (22,25) disposed between the pair of support brackets (21), wherein the adaptor members (22, 25) constitute four sides of an adaptor that is a frame member,
a support member (27) installed in the adaptor constituted by the adaptor members (22, 25), and
a second pin (28) fixed to the support member (27) so as to be perpendicular to the side face of the body (12).

2. The internal mixer (1) according to claim 1, wherein
the first pin (24) is inserted through a through hole (23) that is formed in each of first adaptor members (22), and
the second pin (28) is inserted through a through hole (26) that is formed in each of second adaptor members (25), so that the first and second pins (24,28) are perpendicular to each other.

## Patentansprüche

1. Ein Innenmischer (1) mit:
einem Körper (12) mit einer Mischkammer (5) in dessen Innerem,
einem schwebenden Gewicht (15) zum Drücken eines Materials in der Mischkammer (5),
einem Stabelement (14), das in dem Körper (12) so angeordnet ist, dass ein Ende des Stabelements (14) an dem schwebenden Gewicht (15) befestigt ist und ein oberes Ende des Stabelements (14) sich durch eine obere Oberfläche (11) des Körpers erstreckt, wobei das Stabelement (14) in einer Axialrichtung davon beweglich ist,
einem Verbindungsträger (7), dessen Mittelabschnitt an einem anderen Ende des Stabelements (14) befestigt ist,
zwei Zylindern (3) mit einem ersten und einem zweiten Zylinder (3), wobei ein Ende des ersten Zylinders (3) mit einem Ende des Verbindungsträgers (7) verbunden ist und das andere Ende des ersten Zylinders (3) mit dem Körper (12) verbunden ist, wobei ein Ende des zweiten Zylinders (3) mit einem anderen Ende des Verbindungsträgers (7) verbunden ist und das andere Ende des zweiten Zylinders (3) mit dem Körper (12) verbunden ist, so dass der Verbindungsträger (7) in einer Axialrichtung des Stabelements (14) bewegt werden kann,
einem ersten Verbindungsabschnitt (9), der an einem Verbindungsabschnitt zwischen dem Verbindungsträger (7) und jedem Zylinder (3) vorgesehen ist, wobei der erste Verbindungsabschnitt (9) zumindest eine biaxiale Drehung jedes Zylinders (3) um den ersten Verbindungsabschnitt (9) herum zwischen dem Verbindungsträger (7) und jedem Zylinder (3) zulässt, und
einem Führungsstab (2), der an dem Körper (12) angeordnet ist und eine zu der Axialrichtung des Stabelements (14) parallele Achse besitzt,
**dadurch gekennzeichnet, dass**
der Innenmischer (1) ein Führungselement (13) aufweist, das an einer äußeren Oberfläche der oberen Oberfläche (11) des Körpers angeordnet ist, und ein Durchgangsloch, durch welches das Stabelement (14) eingesetzt ist, in dem Führungselement (13) so ausgebildet ist, dass das Stabelement (14) entlang der Innenumfangswand des Durchgangslochs des Führungselements (13) gleitet,
der Verbindungsträger (7) mit einem Durchgangsloch (17) versehen ist, durch das der Führungsstab (2) eingesetzt ist, und eine Führungsbuchse (16) in das Durchgangsloch (17) eingesetzt ist,
der Verbindungsträger (7) angeordnet ist, um sich entlang dem Führungsstab (2) durch das Durchgangsloch (17) in der Axialrichtung des Stabelements (14) zu bewegen und der Verbindungssträger (7) entlang dem Führungsstab (2) über die Führungsbuchse (16) gleitet,
der erste Verbindungsabschnitt (9) eine sphärische Lagerung (18) an dem Verbindungsabschnitt zwischen dem Verbindungsabschnitt (9) und jedem Zylinder (3) aufweist,
der Innenmischer (1) ferner einen zweiten Verbindungsabschnitt (10) aufweist, der an einem Verbindungsabschnitt zwischen dem Körper (12) und jedem Zylinder (3) vorgesehen ist, wobei jeder Zylinder (3) zumindest biaxial um den zweiten Verbindungsabschnitt (10) herum drehbar ist, und
der zweite Verbindungsabschnitt (10) aufweist:
einen ersten Stift (24), der an einem Paar von Tragbügeln (21) so befestigt ist, dass er parallel zu einer Seitenfläche des Körpers (12) ist,
Adapterelemente (22,25), die zwischen dem Paar von Tragbügeln (21) angeordnet sind, wobei die Adapterelemente (22, 25) vier Seiten eines Adapters bilden, der ein Rahmenelement ist,
ein Tragelement (27), das in dem Adapter, welcher durch die Adapterelemente (22,25) gebildet ist, installiert ist, und
einen zweiten Stift (28), der an dem Tragelement (27) so befestigt ist, dass er senkrecht zu der Seitenfläche des Körpers (12) ist.

2. Der Innenmischer (1) gemäß Anspruch 1, wobei
der erste Stift (24) durch ein Durchgangsloch (23) eingesetzt ist, das in jedem der ersten Adapterelemente (22) ausgebildet ist, und
der zweite Stift (28) durch ein Durchgangsloch (26) eingesetzt ist, das in jedem von zweiten Adapterelementen (25) ausgebildet ist, so dass die ersten und zweiten Stifte (24, 28) senkrecht zueinander sind.

## Revendications

1. Mélangeur (1) interne comprenant :
un corps (12) ayant une chambre (5) de mélange à l'intérieur ;
un poids (15) flottant pour pousser une matière dans la chambre (5) de mélange ;
un élément (14) formant tige, qui est disposé dans le corps (12) de manière à ce qu'une extrémité de l'élément (14) formant tige soit fixée au poids (15) flottant et de manière à ce qu'une extrémité supérieure de l'élément (14) formant tige traverse une surface (11) de sommet du corps, l'élément (14) formant tige étant mobile dans sa direction axiale ;
une poutre (7) de liaison, dont la partie médiane est fixée à une autre extrémité de l'élément (14) formant tige ;
deux cylindres (3) comprenant un premier et un second cylindre (3), une extrémité du premier cylindre (5) étant reliée à une extrémité de la poutre (7) de liaison et l'autre extrémité du premier cylindre (3) étant reliée au corps (12), une extrémité du second cylindre (3) étant reliée à une autre extrémité de la poutre (7) de liaison et l'autre extrémité du second cylindre (5) étant reliée au corps (12) de manière à être en mesure de déplacer la poutre (7) de liaison dans une direction axiale de l'élément (14) formant tige ;
une première partie (9) de liaison prévue à une partie de liaison entre la poutre (7) de liaison et chaque cylindre (3),la première partie (9) de liaison permettant à chaque cylindre de pouvoir tourner au moins biaxialement autour de la première partie (9) de liaison entre la poutre (7) de liaison et chaque cylindre (3) ; et
une tige (2) de guidage, disposée sur le corps (12) et ayant un axe parallèle à la direction axiale de l'élément (14) formant tige, **caractérisé en ce que**
le mélangeur (1) interne comprend un élément (13) de guidage, disposé sur une surface extérieure de la surface (121) de sommet du corps, et un trou traversant, dans lequel l'élément (14) formant tige est inséré, est formé dans l'élément (13) de guidage, de manière à ce que l'élément (14) formant tige glisse sur la paroi périphérique intérieure du trou traversant de l'élément (13) de guidage ;
la poutre (7) de liaison est pourvue d'un trou (17) traversant, dans lequel la tige (2) de guidage est insérée, et une douille (16) de guidage est insérée dans le trou (17) traversant ;
la poutre (7) de liaison est agencée pour se déplacer le long de la tige (2) de guidage dans le trou (17) traversant, dans la direction axiale de l'élément (14) formant tige et la poutre (7) de liaison glisse le long de la tige (2) de guidage dans la douille (16) de guidage ;
la première partie (9) de liaison a un palier (18) sphérique à la partie de liaison entre la partie (9) de liaison et chaque cylindre (3),
le mélangeur (1) interne comprend en outre une deuxième partie (10) de liaison prévue à une partie de liaison entre le corps (12) et chaque cylindre (3), chaque cylindre (3) pouvant tourner au moins biaxialement autour de la deuxième partie (10) de liaison, et
la deuxième partie (10) de liaison comprend :
une première broche (24) fixée à une paire de consoles (21) de support de manière à être parallèle à une face latérale du corps (12),
des moyens (22, 25) formant adaptateur disposés entre la paire de consoles (21) de support, les moyens (22, 25) formant adaptateur constituant quatre côtés d'un adaptateur, qui est un élément de bâti,
un élément (27) de support, monté dans l'adaptateur constitué par les éléments (22, 25) formant adaptateur et
une deuxième broche (28) fixée à l'élément (27) de support de manière à être perpendiculaire à la face latérale du corps (12) .

2. Mélangeur (1) interne suivant la revendication 1, dans lequel la première broche (24) est insérée dans un trou (23) traversant, formé dans chacun des premiers éléments (22) formant adaptateur, et
la deuxième broche (28) est insérée dans un trou (26) traversant, formé dans chacun des deuxièmes éléments (25) formant adaptateur, de manière à ce que la première et la deuxième broches (24, 28) soient perpendiculaires entre elles.
